Europäisches Patentamt

European Patent Office

Office européen des brevets

(19)

(11) Numéro de publication: **0 282 785 B1**

(12) **FASCICULE DE BREVET EUROPEEN**

(45) Date de publication de fascicule du brevet:
23.10.91

(51) Int. Cl.⁵: **B65G 1/137**

(21) Numéro de dépôt: 88102795.7

(22) Date de dépôt: 25.02.88

(54) **Installation pour la confection de lots d'articles.**

(30) Priorité: 27.02.87 FR 8702671

(43) Date de publication de la demande:
21.09.88 Bulletin 88/38

(45) Mention de la délivrance du brevet:
23.10.91 Bulletin 91/43

(84) Etats contractants désignés:
DE FR GB NL SE

(56) Documents cités:
EP-A- 0 208 029
DE-A- 3 440 010
DE-A- 3 521 704
US-A- 3 561 619

PATENT ABSTRACTS OF JAPAN, vol. 8, no.
220 (M-330)[1657], 6 octobre 1984, page 27 M
330; & JP-A-59 102 703 (DAIFUKU KIKO K.K.)
13-06-1984

(73) Titulaire: **COMPAGNIE GENERALE D'AUTOMA-
TISME CGA-HBS**
**12, rue de la Baume**
**F-75008 Paris(FR)**

(72) Inventeur: **Bergerioux, Jean-Marcel**
**2 Allée des Tilleuls Chateauneuf sur Isère**
**F-26300 Bourg de Peage(FR)**
Inventeur: **Pavie, Claude**
**39 rue Hoche**
**F-78800 Houilles(FR)**
Inventeur: **Plent, Christian**
**65 rue Roger Salengro**
**F-26500 Bourg Les Valence(FR)**
Inventeur: **Constant, Bernard**
**13 Lot. Les Chatons**
**F-26760 Beaumont Les Valence(FR)**

(74) Mandataire: **Weinmiller, Jürgen et al**
**Lennéstrasse 9 Postfach 24**
**W-8133 Feldafing(DE)**

## Description

La présente invention est relative à une installation pour la confection de lots d'articles selon le préambule de la revendication 1. Une installation de ce genre est décrite dans le document EP-A-0 208 029.

Cette invention s'applique avantageusement à la délivrance de médicaments, en particulier dans les milieux hospitaliers, pour la constitution de lots de médicaments, ces lots étant affectés individuellement à des patients, par exemple d'un même service, en réponse à l'ensemble des ordonnances qui leur ont été prescrites. Elle peut aussi, tout aussi bien, s'appliquer à la distribution de petits articles, dans des centres, magasins, rayons de vente ou ateliers de fabrication, par exemple articles de quincaillerie ou composants électroniques, sous forme de lots individuels en réponse à une pluralité de commandes passés par un ensemble de clients ou de services de production.

On connaît déjà de nombreux dispositifs assurant la distribution de produits en réponse à des commandes, en particulier de produits pharmaceutiques dans les officines ou services centraux d'approvisionnement des officines.

Les dispositifs connus de ce type ont été développés pour permettre notamment un stockage important de produits, une manutention automatisée avec un rassemblement des articles prélevés en réponse à chaque commande. Ces dispositifs peuvent être pilotés par un système électronique commandé à partir d'une console ou par un ordinateur avec terminal à clavier, en vue de permettre, en outre, une gestion des stocks disponibles et des réassortiments nécessaires.

Ainsi, le document FR-A-2 138 272 décrit un dispositif de stockage et de distribution d'objets ayant une pluralité de tiroirs verticaux chacun constitué par une rangée de compartiments verticaux.

Chaque compartiment contient un empilement d'objets identiques sous forme de boîtes ou analogues. Les tiroirs appartiennent à un ou plusieurs modules de stockage. Dans leur module ils sont individuellement mobiles en translation dans une direction perpendiculaire aux compartiments, pour permettre le positionnement de l'un ou l'autre des compartiments du tiroir entraîné en translation au-dessus d'un tapis transporteur affecté à ce module. Un taquet entraîné par le tapis accroche, par le fond du compartiment convenable, l'objet souhaité se trouvant au bas de l'empilement contenu dans le compartiment et assure son extraction. Cet objet tombe sur le tapis transporteur et est ainsi entraîné par ce seul tapis ou d'autres auxiliaires vers un point central de récupération tandis que le tiroir est ramené dans sa position initiale dans son module.

De tels dispositifs connus portent essentiellement sur l'organisation de l'ensemble de stockage et sur les moyens de prélèvement automatique de chaque objet souhaité. Ils traitent les commandes reçues l'une après l'autre.

Un but de la présente invention est de réaliser une installation de confection de lots d'éléments conditionnées de manière unitaire ou en boîtes de plusieurs articles, en réponse à un ensemble de commandes, le mode de prélèvement des articles pouvant être aussi bien manuel qu'automatique, et pouvant donc se prêter aisément aux systèmes de stockage courant existants, en permettant un progrès significatif quant aux prestations rendues et au gain de productivité.

L'invention a pour objet une installation pour la confection de lots d'articles comprenant un poste d'entrée de boîtes destineès à recevoir des lots d'articles, un poste d'évacuation des boîtes chargées, au moins un poste de travail pour un opérateur, chacun desdits postes de travail comportant un organe de stockage desdits articles espèce par espèce, caractérisée en ce que chaque poste de travail comporte en outre un lecteur automatique d'une identification dont est munie chaque article, et un trappe communiquant avec une goulotte à ouverture commandable, et que ladite installation comprend en outre une chaîne sans fin à godets, disposée de manière que les godets défilent sous les goulottes de chacun des postes et un tapis mobile disposé sous les godets et reliant ledit poste d'entrée audit poste d'évacuation, chaque godet étant muni d'un dispositif de pivotement commandable pour laisser tomber l'article qu'elle contient dans une boite, l'installation étant pilotée par un calculateur qui commande les ouvertures et fermetures des trappes et des goulottes et le pivotement des godets selon un programme établi selon les lots à réaliser.

Dans un mode particulier de réalisation, les boîtes ont chacune deux compartiments, un dispositif sélecteur étant placé entre la chaîne à godets et le tapis pour diriger Les objet vers l'un ou l'autre desdits compartiments.

L'invention sera bien comprise à la lecture de la description ci-après d'un mode préféré de réalisation de l'invention, en référence au dessin annexé dans lequel :
- La figure 1 est une vue schématique en perspective d'une installation de confection de lots selon l'invention :
- La figure 2 est une vue en coupe transversale de l'installation ;
- La figure 3 est une vue de face de l'installation montrant les godets et les trémies de distribution ;
- La figure 4 est une vue en élévation d'une goulotte de réception ;

- La figure 5 est une vue partielle de dessus du plan de travail de l'installation ;
- La figure 6 est une vue schématique en élévation d'une variante de réalisation du dispositif sélecteur ;
- La figure 7 est une vue de profil du même dispositif sélecteur.

L'exemple choisi pour illustrer l'invention est une installation, pour la confection de lots d'articles, comprenant trois postes de travail où trois opérateurs peuvent travailler ensemble à la confection d'un même lot. Bien entendu, l'installation peut fonctionner avec un ou deux opérateurs seulement ; on peut également envisager une installation comportant seulement un ou deux postes de travail ou plus de trois postes de travail.

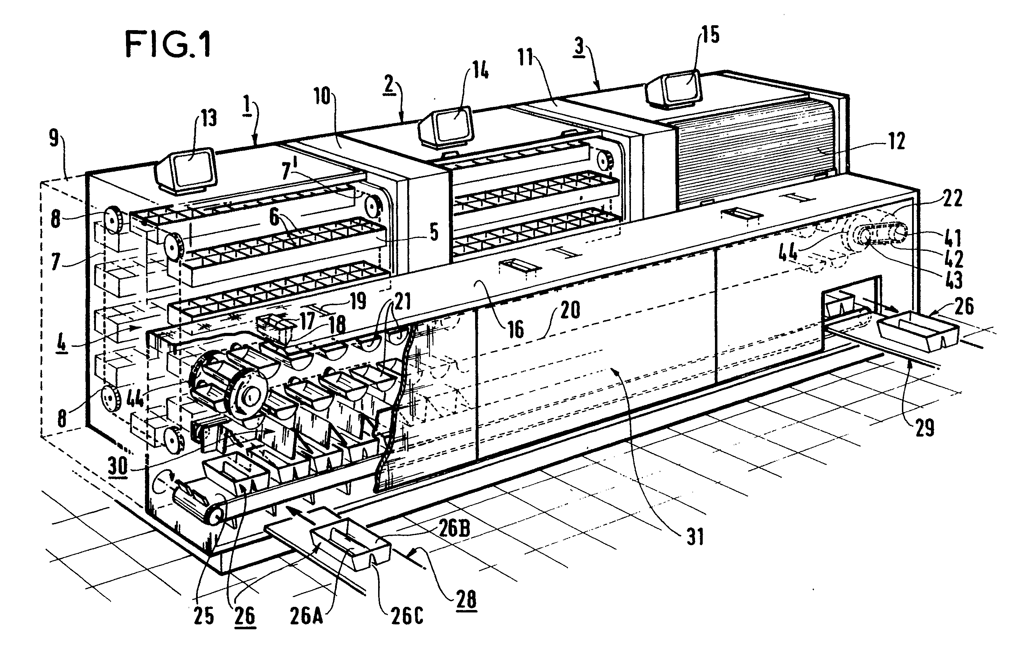

Revenant à l'exemple illustré dans la figure 1, les postes de travail 1, 2, et 3 comportent chacun un carrousel tel que 4 pour le stockage des articles. Chaque carrousel comporte une pluralité de bacs horizontaux 5, comportant chacun une pluralité de cases 6 contenant chacun des articles d'une espèce donnée. On supposera que l'exemple décrit concerne une installation équipant une pharmacie d'hôpital et que les articles sont des médicaments. Les lots à confectionner concernent chacun les médicaments d'un malade pour une journée, répartis dans l'exemple décrit, en deux prises, l'une pour le matin, l'autre pour l'après-midi.

Les bacs se déplacent en restant en position horizontale, selon une trajectoire fermée, grâce à des chaînes d'entraînement 7 et 7' et des galets 8. Les moteurs d'entraînement, non représentés, sont disposés dans des volumes 9, 10 et 11, adjacents aux carrousels respectifs. L'accès aux bacs peut être condamné, lorsque le travail est terminé par un volet 12.

Chaque poste de travail comporte un écran de visualisation (13, 14, 15) permettant à l'opérateur de suivre un programme de confection de lots.

Le plan de travail 16 est commun aux trois postes et comporte, à chaque poste, une ouverture 17 pratiquée au-dessus d'une goulotte de chargement 18. A chaque-poste il y a également un dispositif 19 de lecture du marquage dont est muni chaque article. Ce peut être par exemple un code à barres lu optiquement.

L'installation comprend une chaîne sans fin 20 à godets 21, commun aux trois postes de travail. La chaîne, entraînée par un moteur 22, est diposée sous les goulottes de manière que les godets 21 défilent sous les goulottes 18.

Un tapis mobile sans fin 25 est placé sous la chaîne à godet et sert au transport de boîtes 26 recevant les lots d'articles.

Les boîtes vides sont amenées par un poste de chargement 28 à une extrémité du tapis.

Les boîtes ayant reçu un lot sont évacuées à un poste de déchargement 29 à l'autre extrémité du tapis.

Les boîtes 26 possèdent dans l'exemple donné deux compartiments 26A et 26B correspondant aux deux prises de médicament de la journée.

Le fond de la boîte comporte une fente transversale 26C entre ces deux compartiments.

Un dispositif sélecteur 30, décrit en détail plus loin, permet de diriger un article dans l'un ou l'autre des compartiaments précités.

La face avant de l'installation est fermée par un panneau 31.

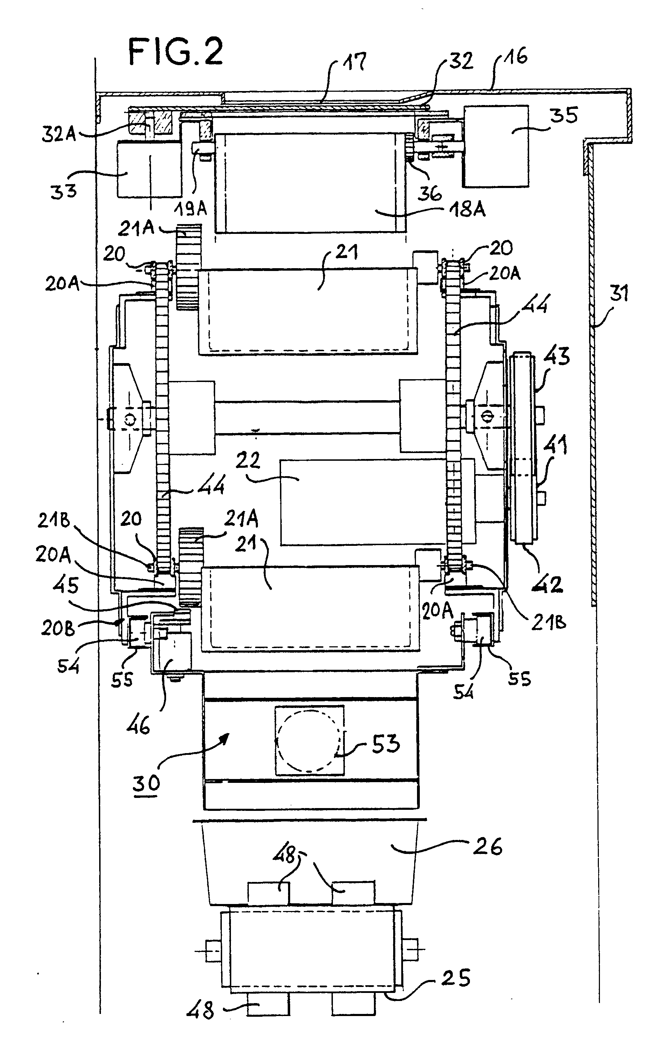

La figure 2 est une vue en coupe transversale de l'installation.

On y distingue le plan de travail 16 et l'ouverture 17 par laquelle l'opérateur introduit les articles.

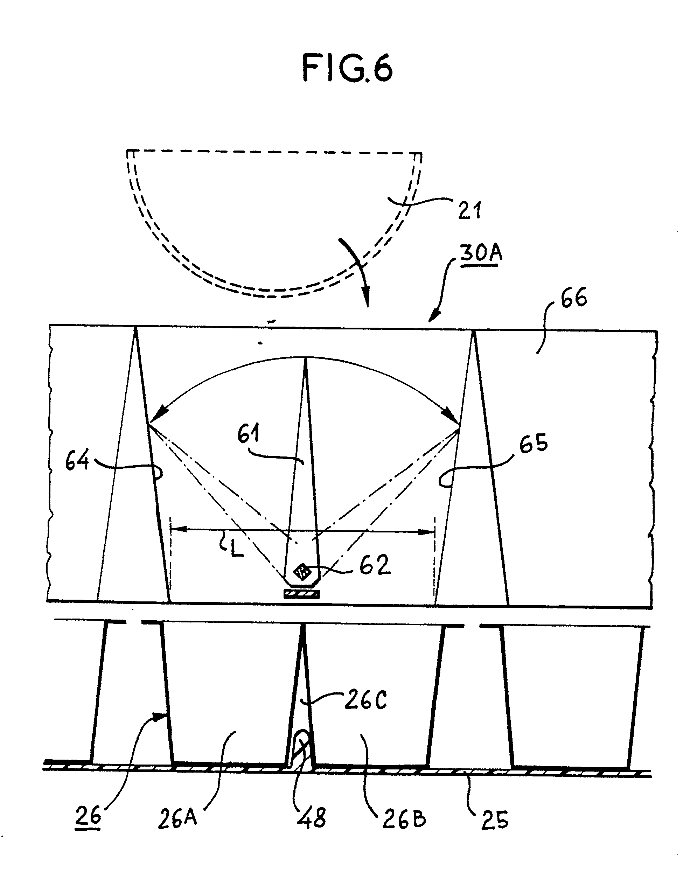

Un volet 32, (voir aussi figure 5), déplaçable dans son plan en rotation autour d'un axe 32A au moyen d'un moteur 33, permet d'obturer l'ouverture 17.

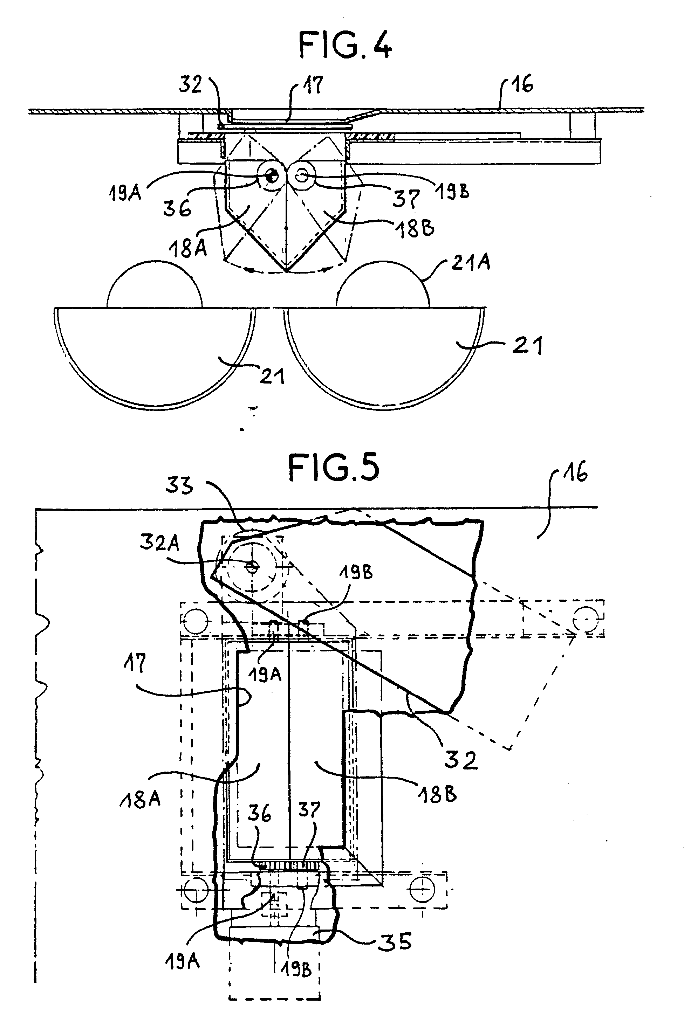

La goulotte 18, (voir aussi figure 4) comprend deux demi-coquilles 18A et 18B qui sont mobile en rotation autour d'arbres respectifs 19A et 19B, grâce à un moteur 35 entraînant un pignon 36 solidaire de la demi-coquille 18A, la demi-coquille 18B étant entraînée par un galet 37 coopérant avec le galet 36.

La chaîne 20 à godets 21, est entraînée par un moteur 22 supportée par des rails 20A fixés à un châssis 20B, actionnant, au moyen d'un pignon 41, d'une chaîne 42 et d'un pignon 43, des roues dentées d'entraînement 44.

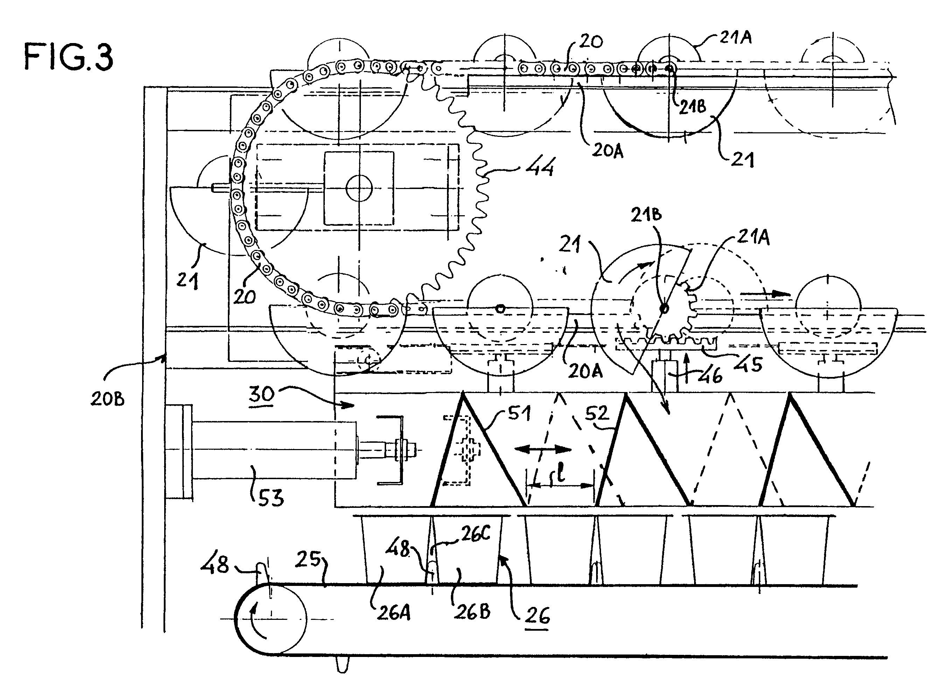

Chaque godet 21 est muni d'un dispositif de pivotement. Dans l'exemple décrit, chaque godet est solidaire d'un galet 21A (voir aussi figure 3) qui en coopérant avec une crémaillère 45 déplaçable en translation au moyen d'un électro-aimant 46, permet une rotation du godet pour permettre à l'article contenu dans le godet de tomber dans l'une des boîtes 26 situées au-dessous.

Le tapis 25 d'entraînement des boîtes porte des taquets 48 coopérant avec la fente 28C des boîtes. Ces taquets assurent l'immobilité des boîtes par rapport au tapis ainsi qu'un espacement ou pas constant entre elles.

Le dispositif sélecteur 30 comprend une pluralité de trémies constituées chacune de deux tôles inclinées convergentes 51 et 52, la largeur 1 de l'ouverture d'une trémie, comptée dans le sens de déplacement du tapis, étant égale à la largeur d'un compartiment d'une boîte.

La tôle 51 d'une trémie est soudée à la tôle 52 de la trémie voisine, de sorte que l'ensemble des trémies constitue un ensemble solidaire déplaçable en translation d'un pas 1, au moyen d'un vérin 53. Cet ensemble est supporté par des galets 54 roulant sur des rails 55.

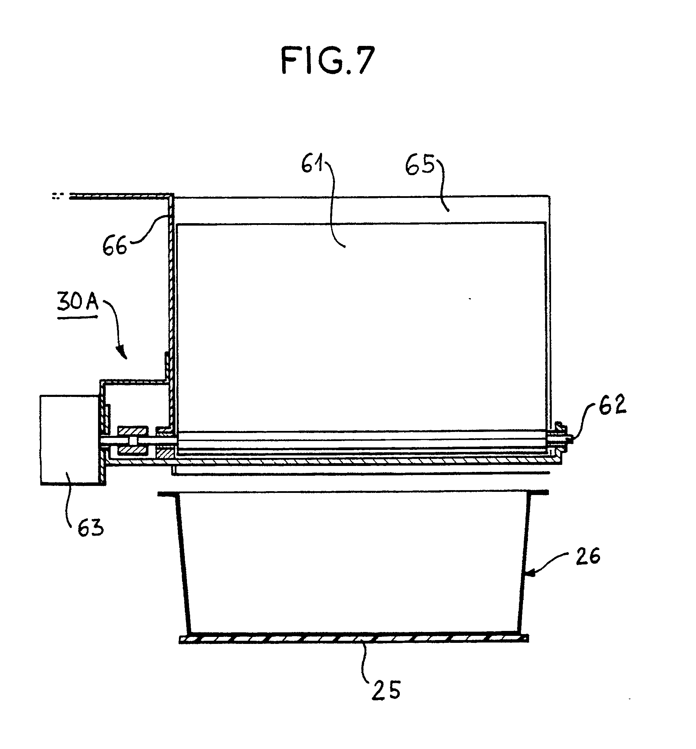

Les figures 6 et 7 illustrent une variante 30A

du dispositif sélecteur, dans laquelle les figures 6 et 7, les trémies sont remplacés par une pluralité de tôles rectangulaires 61 munies d'un arbre 62 entraînée en rotation par un moteur 63.

La course de la tôle 61 est limitée par deux tôles planes 64 et 65, quasi-verticales séparés par une distance L égale à la largeur de la boîte, comptée dans la direction de déplacement du tapis.

Les tôles 64 et 65 sont fixées à une tôle 66 commune perpendiculaire.

Selon que la tôle 61 est en appui sur le plan 64 ou le plan 65, l'article est dirigé sur l'une ou l'autre des deux compartiments de la boîte.

L'installation qui vient d'être décrite est commandée au moyen d'un calculateur programmé qui actionne les divers moteurs et vérins selon un programme de réalisation des commandes.

L'opérateur voit apparaître sur l'écran le nom ou le numéro du premier article à choisir dans le stock, par exemple l'article A.

Il en prélève le nombre indiqué et les introduit un par un dans les ouvertures 17 après les avoir identifiés par passage devant le lecteur 19.

Un article étant tombé dans la goulotte 18, le volet 32 se ferme, de sorte que l'introduction se fait à un rythme commandé par la machine.

Le premier article A reste dans la goulotte jusqu'à l'arrivée d'un godet 21 vide.

A ce moment la goulotte est ouverte et l'article tombe dans le godet.

La goulotte se referme alors, le volet s'ouvre et un deuxième article A peut être alors introduit dans l'ouverture 17 par l'opérateur.

Lorsque le godet contenant l'article A arrive en coincidence avec la première boîte devant recevoir cet article, le godet pivote et l'objet tombe dans l'un des compartiments de ladite boîte, selon la position du sélecteur 30. Dès qu'une boîte est chargée sur le tapis, elle est affectée à une commande déterminée et les divers godets s'ouvriront successivement au-dessus de cette boîte pour réaliser complètement la commande avant l'arrivée de la boîte au poste de déchargement.

Une imprimante non représentée établit des étiquettes d'identification des boîtes qui sont automatiquement apposées sur chaque boîte.

La boîte peut éventuellement comporter un couvercle ; elle est présentée alors couvercle ouvert au poste de chargement et le couvercle est fermé automatiquement avant d'arriver au poste de déchargement.

On donne ici un exemple pratique : on peut réaliser (avec 3 opérateurs travaillant ensemble) en 60 minutes, 100 commandes de 10 articles en moyenne (choisis parmi 600 articles).

A cet effet un carrousel comporte 20 rangées de bacs horizontaux ayant 10 cases chacun.

Les godets 21 se déplacent à la vitesse de 2,5 godets par seconde, le tapis 25 se déplaçant à la vitesse de 0,36 km/min.

Le chargement et le déchargement des boîtes est effectué par des postes automatiques qui font l'objet d'une demande de brevets distincte.

**Revendications**

1. Installation pour la confection de lots d'articles comprenant un poste d'entrée de boîtes (26) destineès à recevoir des lots d'articles, un poste d'évacuation des boîtes chargées, au moins un poste de travail pour un opérateur, chacun desdits postes de travail comportant un organe de stockage (4) desdits articles espèce par espèce, caractérisé en ce que chaque poste de travail comporte en outre un lecteur (19) automatique d'une identification dont est munie chaque article, et un trappe (17) communiquant avec une goulotte (18) à ouverture commandable, et que ladite installation comprend en outre une chaîne sans fin à godets (21), disposée de manière que les godets défilent sous les goulottes de chacun des postes et un tapis mobile (25) disposé sous les godets et reliant ledit poste d'entrée audit poste d'évacuation, chaque godet étant muni d'un dispositif de pivotement commandable pour laisser tomber l'article qu'elle contient dans une boite, l'installation étant pilotée par un calculateur qui commande les ouvertures et fermetures des trappes et des goulottes et le pivotement des godets selon un programme établi selon les lots à réaliser.

2. Installation selon la revendication 1, caractérisée en ce que les boîtes (26) ont chacune deux compartiments (26A, 26B), un dispositif sélecteur (30) étant placé entre la chaîne à godets (21) et le tapis (25) pour diriger les objets vers l'un ou l'autre desdits compartiments.

3. Installation selon la revendication 2, caractérisée en ce que ledit dispositif sélecteur comprend une pluralité de trémies (51, 52) déplaçables ensemble en translation.

4. Installation selon la revendication 2, caractérisée en ce que ledit dispositif sélecteur comprend une pluralité de volets pivotants (61) actionnés individuellement.

5. Installation selon l'une des revendications 1 à 4, caractérisée en ce que le dispositif de pivotement des godets (21) comprend une pluralité de crémaillères (45) mobiles en translation coopérant avec un pignon (21A) solidaire de chacun desdits godets.

6. Installation selon l'une des revendications 1 à 5, caractérisée en ce que le tapis mobile (25) comprend des taquets (48) pour le maintien en position des boîtes (26) selon un pas d'espacement déterminé.

## Claims

1. An installation for making up batches of articles, comprising an inlet station for boxes (26) intended to receive batches of articles, an unloading station for loaded boxes, at least one operator working station, each of said working stations including a storage member (4) for storing said articles species-by-species, characterized in that each working station includes an automatic reader (19) for reading an identification item applied to each article, and a hatch (17) communicating with a chute (18) whose opening may be controlled, and in that said installation further includes an endless chain of buckets (21) disposed in such a manner that the buckets pass beneath the chutes, and a moving belt (25) disposed beneath the buckets and linking said inlet station up with said unloading station, each bucket being provided with a controllable pivoting device adapted to drop the article which it contains into a box, said installation being supervised by a computer which controls the opening and the closing of the hatches and the chutes and the pivoting of the buckets in accordance with a program which is established according to the batches to be made up.

2. An installation according to claim 1, characterized in that each box (26) has two compartments (26A, 26B), a selector device (30) being placed between the chain of buckets (21) and the belt (25) in order to guide objects to one or other of said compartments.

3. An installation according to claim 2, characterized in that said selector device comprises a plurality of hoppers (51, 52) which may be displaced together in translation.

4. An installation according to claim 2, characterized in that said selector device comprises a plurality of individually operated pivoted flaps (61).

5. An installation according to any one of claims 1 to 4, characterized in that the device for pivoting the buckets (21) comprises a plurality of racks (45) movable in translation and cooperating with respective gear wheels (21A) fixed to each of said buckets.

6. An installation according to any one of claims 1 to 5, characterized in that the moving belt (25) includes catches (48) for holding the boxes (26) in position at a predetermined spacing.

## Patentansprüche

1. Anlage zum Zusammenstellen von Warensendungen, mit einer Eingabestation (26) für Kästen zur Aufnahme der Warenartikel, einer Ausgabestation für die beladenen Kasten und mindestens einer einzelnen Arbeitsstation für einen Bediener, wobei jede Arbeitsstation eine Einrichtung (4) zur nach Artikeln geordneten Vorratslagerung aufweist, dadurch gekennzeichnet, daß jede Arbeitsstation weiter einen automatischen Leser (19) zum Lesen einer Identifikationsangabe, mit welcher jeder Artikel versehen ist, und eine Ladeluke (17) aufweist, die mit einer Rutsche (18) mit steuerbarer Öffnung in Verbindung steht, und daß die Anlage weiter eine endlose Eimerkette (21), die so angeordnet ist, daß sich die Eimer unter den Rutschen jeder Station entlangbewegen, und ein unter den Eimern angeordnetes Transportband (25) aufweist, welches die Eingabe- und die Ausgabestation miteinander verbindet, wobei jeder Eimer mit einer steuerbaren Kippvorrichtung zum Entleeren des in ihm enthaltenen Artikels in einen Kasten versehen ist und die Anlage von einem Rechner gesteuert wird, der das Öffnen und Schließen der Luken und Rutschen sowie das Kippen der Eimer gemäß einem Programm steuert, das entsprechend den zusammenzustellenden Warensendungen erstellt ist.

2. Anlage nach Anspruch 1, dadurch gekennzeichnet, daß die Kästen (26) jeweils zwei Fächer (26A, 26B) besitzen und eine Wählvorrichtung (30) zwischen der Eimerkette (21) und dem Band (25) angeordnet ist, um die Gegenstände in das eine oder das andere Fach zu lenken.

3. Anlage nach Anspruch 2, dadurch gekennzeichnet, daß die Wählvorrichtung eine Vielzahl von Trichtern (51, 52) aufweist, die gemeinsam längsverschiebbar sind.

4. Anlage nach Anspruch 2, dadurch gekennzeichnet, daß die Wählvorrichtung eine Vielzahl von Schwenkklappen (61) aufweist, die einzeln betätigbar sind.

5. Anlage nach einem der Ansprüche 1 bis 4, dadurch gekennzeichnet, daß die Kippvorrichtung für die Eimer (21) eine Vielzahl von längsverschiebbaren Zahnstangen (45) aufweist, die mit einem an jedem Eimer befestigten Ritzel (21A) zusammenwirken.

6. Anlage nach einem der Ansprüche 1 bis 5, dadurch gekennzeichnet, daß das Transportband (25) Mitnehmer (48) zur Stellungssicherung der Kästen entsprechend einem bestimmten Zwischenabstand aufweist.

# FIG.1

EP 0 282 785 B1

FIG.2

# FIG.3

EP 0 282 785 B1

# FIG.4

# FIG.5

# FIG.6

# FIG.7